# EUROPÄISCHE PATENTSCHRIFT

(11) **EP 3 237 947 B1**
(45) Veröffentlichungstag und Bekanntmachung des Hinweises auf die Patenterteilung: **27.11.2019**
(21) Anmeldenummer: 15813867.7
(22) Anmeldetag: 22.12.2015
(51) Int. Cl.: G02B 7/182

(54) **OPTISCHE BAUGRUPPE MIT EINEM KEGELSPIEGEL**
OPTICAL ASSEMBLY COMPRISING A CONE-SHAPED MIRROR
MODULE OPTIQUE AVEC MIROIR CONIQUE

(30) Priorität: 22.12.2014 EP 14199787
(43) Veröffentlichungstag der Anmeldung: 01.11.2017
(73) Patentinhaber: Hilti Aktiengesellschaft, 9494 Schaan (LI)
(72) Erfinder: SANCHEN, Guenter, 9472 Grabs (CH)
(74) Vertreter: Hilti Aktiengesellschaft Corporate Intellectual Property
(86) Internationale Anmeldenummer: PCT/EP2015/080921
(87) Internationale Veröffentlichungsnummer: WO 2016/102535

(56) Entgegenhaltungen:
- WO-A1-00/70375
- JP-A- H06 331 356
- US-A1- 2012 275 043

## Beschreibung

### Technisches Gebiet

Die vorliegende Erfindung betrifft ein Lasersystem mit einer optischen Baugruppe mit einem Kegelspiegel gemäß dem Oberbegriff des Anspruchs 1.

### Stand der Technik

US 2012/0275043 offenbart eine bekannte optische Baugruppe mit einem Kegelspiegel, einer Kollimationslinse, einem Optikträger mit einem ersten Trägerelement, an dem die Kollimationslinse befestigt ist, und einem zweiten Trägerelement, an dem der Kegelspiegel befestigt ist, und einer Verbindungseinrichtung, die das erste und zweite Trägerelement miteinander verbindet. Die optische Baugruppe ist im Strahlengang des Laserstrahls hinter einer Laserstrahlquelle angeordnet. Die Laserstrahlquelle erzeugt einen divergenten Laserstrahl, der auf die Kollimationslinse trifft und als kollimierter Laserstrahl die Kollimationslinse verlässt. Der Kegelspiegel weist eine reflektierende Mantelfläche auf, die den kollimierten Laserstrahl umlenkt und in einen Ringstrahl umformt, der sich in einer Ausbreitungsebene senkrecht zur Kegelachse des Kegelspiegels ausbreitet.

Die Verbindungseinrichtung, die das erste und zweite Trägerelement miteinander verbindet, umfasst drei oder mehr dünnwandige Verbindungselemente, die die Trägerelemente miteinander verbinden. Dabei sind die dünnwandigen Verbindungselemente parallel zur Kegelachse des Kegelspiegels angeordnet und die Linien ("extension lines") schneiden sich auf der Kegelachse. Die senkrechte Ausrichtung der dünnwandigen Verbindungselemente hat den Nachteil, dass der Ringstrahl im Bereich der Verbindungselemente vollständig unterbrochen ist und bei der Projektion des Ringstrahls auf einen Untergrund im Ringstrahl Unterbrechungen auftreten. Die Breite der Unterbrechung nimmt mit zunehmendem Abstand vom Kegelspiegel zu.

### Darstellung der Erfindung

Die Aufgabe der vorliegenden Erfindung besteht darin, ein Lasersystem mit einer optischen Baugruppe mit einem Kegelspiegel dahingehend weiter zu entwickeln, dass Unterbrechungen im Ringstrahl bei der Projektion auf einen Untergrund vermieden werden. Diese Aufgabe wird bei dem eingangs genannten Lasersystem erfindungsgemäß durch die Merkmale des unabhängigen Anspruchs gelöst. Vorteilhafte Weiterbildungen sind in den abhängigen Ansprüchen angegeben.

Erfindungsgemäß ist vorgesehen, dass die Verbindungseinrichtung eine Anzahl von 2n, n ≥ 1 Verbindungselementen aufweist, wobei n Verbindungselemente als erste Verbindungselemente und n Verbindungselemente als zweite Verbindungselemente ausgebildet sind, wobei die ersten Verbindungselemente und zweiten Verbindungselemente gegensinnig angeordnet sind und in einer Umfangsrichtung des Kegelspiegels abwechselnd hintereinander angeordnet sind. Durch die gegensinnige Anordnung der Verbindungselemente wird die Stabilität der Verbindung zwischen den Trägerelementen verbessert.

Die windschiefe Anordnung der Verbindungselemente zur Kegelachse des Kegelspiegels hat den Vorteil, dass sich ein Teil des Ringstrahls oberhalb der Verbindungselemente und ein Teil des Ringstrahls unterhalb der Verbindungselemente ausbreiten können; nur der Teil des Ringstrahls, der direkt auf das Verbindungselement auftrifft, wird ausgeblendet. Zwei Geraden werden als windschief bezeichnet, wenn sie sich weder schneiden noch parallel zueinander angeordnet sind. Der ausgeblendete Teil des Ringstrahls kann dazu führen, dass die Helligkeit des Ringstrahls in diesem Winkelbereich reduziert ist, wobei diese Reduzierung für den Anwender kaum wahrzunehmen ist. Die Breite des Winkelbereiches, in dem die Helligkeit des Ringstrahls reduziert ist, kann über den Neigungswinkel des Verbindungselementes eingestellt werden; je schräger das Verbindungselement angeordnet ist, umso breiter ist der Winkelbereich mit reduzierter Helligkeit.

Bevorzugt sind das erste Trägerelement, das zweite Trägerelement und die Verbindungseinrichtung einteilig ausgebildet. Die einteilige Ausbildung des Optikträgers und der Verbindungseinrichtung hat den Vorteil, dass die Justierung der Trägerelemente bereits bei der Herstellung des einteiligen Optikträgers erfolgt.

Besonders bevorzugt sind das erste Trägerelement, das zweite Trägerelement und die Verbindungseinrichtung als einteiliges Druckgussteit ausgebildet. Die Ausbildung als Druckgussteil hat den Vorteil, dass für die Verbindungselemente auch komplexere Formen realisiert werden können.

Bevorzugt sind die n ersten und zweiten Verbindungselemente wendelförmig ausgebildet. Durch die wendelförmige Ausbildung der n ersten und zweiten Verbindungselemente kann der Teil des Ringstrahls, der durch die Verbindungselemente ausgeblendet wird, gegenüber ebenen Verbindungselementen weiter reduziert werden. Durch die Schrägstellung der ersten und zweiten Verbindungselemente wird ein Verbindungselement von unterschiedlichen Teilen des Ringstrahls getroffen. Die wendelförmige Ausbildung der ersten und zweiten Verbindungselemente führt dazu, dass jeder Teil des Ringstrahls, der sich ausgehend von der reflektierenden Mantelfläche des Kegelspiegels radial ausbreitet, senkrecht auf das Verbindungselement auftrifft und der ausgeblendete Teil des Ringstrahls minimiert wird.

In einer bevorzugten Ausführung sind die n ersten und zweiten Verbindungselemente um einen Neigungswinkel zwischen 5° und 45° zur Kegelachse geneigt. Über den Neigungswinkel der ersten und zweiten Verbindungselemente zur Kegelachse kann die Breite des Winkelbereiches, in dem die Helligkeit des Ringstrahls reduziert ist, eingestellt werden. Je schräger die ersten und zweiten Verbindungselemente angeordnet sind, umso breiter ist der Winkelbereich mit reduzierter Helligkeit.

Bevorzugt weisendie n ersten und zweiten Verbindungselemente in der Ausbreitungsebene einen Abstand zur Kegelachse zwischen 5 mm und 20 mm auf. Ein Abstand zwischen 5 mm und 20 mm zur Kegelachse erlaubt eine kompakte Ausbildung der optischen Baugruppe.

Die Verbindungseinrichtung weist in einer bevorzugten Ausführungsform eine Anzahl von mindestens 3 Verbindungselementen auf, wobei die Wandstärke der Verbindungselemente zwischen 0,1 mm und 0,7 mm beträgt. Um eine ausreichende Stabilität der Verbindungseinrichtung zu gewährleisten, kann ein Verbindungselement eingesetzt werden, das entsprechend dick ausgebildet sein muss. Alternativ können mehrere dünnwandige Verbindungselemente mit Wandstärken zwischen 0,1 mm und 0,7 mm eine ausreichende Stabilität bieten.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Lasersystem mit einer Laserstrahlquelle, die einen Laserstrahl erzeugt, und einer optischen Baugruppe, die im Strahlengang des Laserstrahls hinter der Laserstrahlquelle angeordnet ist und eine Kollimationslinse, einen Kegelspiegel und einen Optikträger umfasst;
- FIG. 2: eine erste Ausführungsform einer erfindungsgemäßen optischen Baugruppe bestehend aus einer Kollimationslinse, einem Kegelspiegel und einem mehrteiligen Optikträger mit einem ersten und zweiten Trägerelement, die über vier ebene Verbindungselemente verbunden sind; und
- FIG. 3: eine zweite Ausführungsform einer erfindungsgemäßen optischen Baugruppe bestehend aus einer Kollimationslinse, einem Kegelspiegel und einem einteiligen Optikträger mit einem ersten und zweiten Trägerelement, die über vier wendelförmige Verbindungselemente verbunden sind.

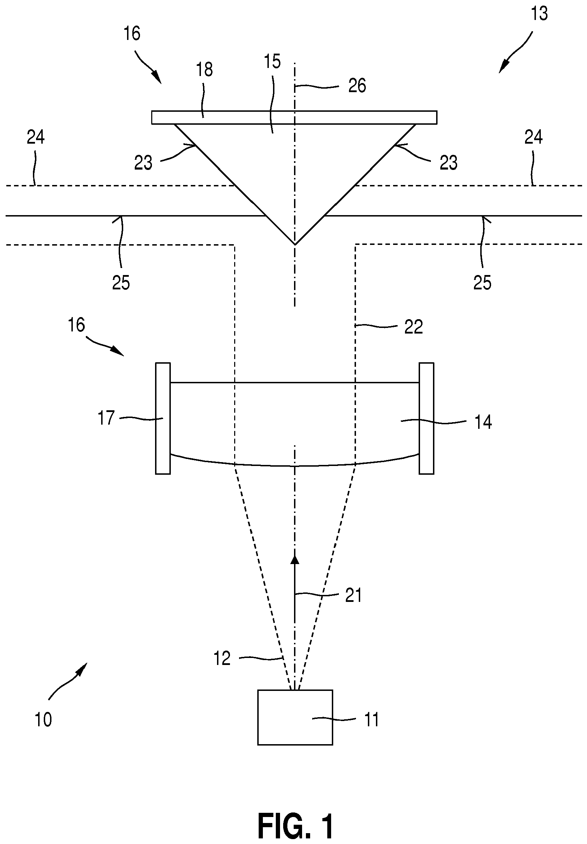

FIG. 1 zeigt ein Lasersystem **10** mit einer Laserstrahlquelle **11,** die einen Laserstrahl **12** erzeugt, und einer optischen Baugruppe **13,** die im Strahlengang des Laserstrahls 12 hinter der Laserstrahlquelle 11 angeordnet ist. Die optische Baugruppe 12 umfasst eine Kollimationslinse **14,** einen Kegelspiegel **15** und einen Optikträger **16** mit einem ersten Trägerelement **17,** an dem die Kollimationslinse 14 befestigt ist, und einem zweiten Trägerelement **18,** an dem der Kegelspiegel **15** befestigt ist.

Die Laserstrahlquelle 11 ist als Halbleiterlaser ausgebildet, der den Laserstrahl 12 im sichtbaren Spektrum, beispielsweise einen roten Laserstrahl mit einer Wellenlänge von 635 nm oder einen grünen Laserstrahl mit einer Wellenlänge von 510 nm oder 532 nm, erzeugt. Nach dem Austritt des Laserstrahls 12 aus der Laserstrahlquelle 11 kommt es aufgrund der Divergenz zu einer Aufweitung des Laserstrahls, d.h. der Strahldurchmesser des Laserstrahls nimmt mit der Entfernung des Laserstrahls von der Laserstrahlquelle 11 zu.

Der divergente Laserstrahl 12 breitet sich in einer Ausbreitungsrichtung **21** aus und trifft auf die Kollimationslinse 14, die den Laserstrahl 12 in einen kollimierten Laserstrahl **22** umformt. Der kollimierte Laserstrahl 22 breitet sich in der Ausbreitungsrichtung 21 aus und trifft auf den Kegelspiegel 15. Der Kegelspiegel 15 hat die geometrische Form eines geraden Kreiskegels. Ein Kreiskegel ist ein Kegel mit einer kreisförmigen Grundfläche. Ein Kegel ist ein geometrischer Körper, der entsteht, wenn alle Punkte einer in einer Ebene liegenden, begrenzten Fläche geradlinig mit einem Punkt, der außerhalb der Ebene liegt, verbunden werden. Die Fläche wird als Grundfläche, die Begrenzungslinie der Grundfläche als Leitkurve und der Punkt als Kegelspitze bezeichnet. Der Abstand der Kegelspitze von der Grundfläche definiert die Höhe des Kegels. Die Verbindungslinien der Kegelspitze mit der Leitkurve werden als Mantellinien und die Vereinigung der Mantellinien als Mantelfläche des Kegels bezeichnet. Bei einem geraden Kegel mit einer kreisförmigen Grundfläche liegt die Kegelspitze auf der Kegelachse, die senkrecht zur Grundfläche durch den Mittelpunkt der Grundfläche verläuft.

Der kollimierte Laserstrahl 22 trifft auf die Mantelfläche **23** des Kegelspiegels 15, die für die Wellenlänge des Laserstrahls 22 reflektierend ausgebildet ist. Der Laserstrahl 22 wird an der Mantelfläche 23 umgelenkt und in einen Ringstrahl **24** umgeformt. Der Ringstrahl 24 breitet sich in einer Ausbreitungsebene **25,** die senkrecht zur Kegelachse **26** angeordnet ist, aus.

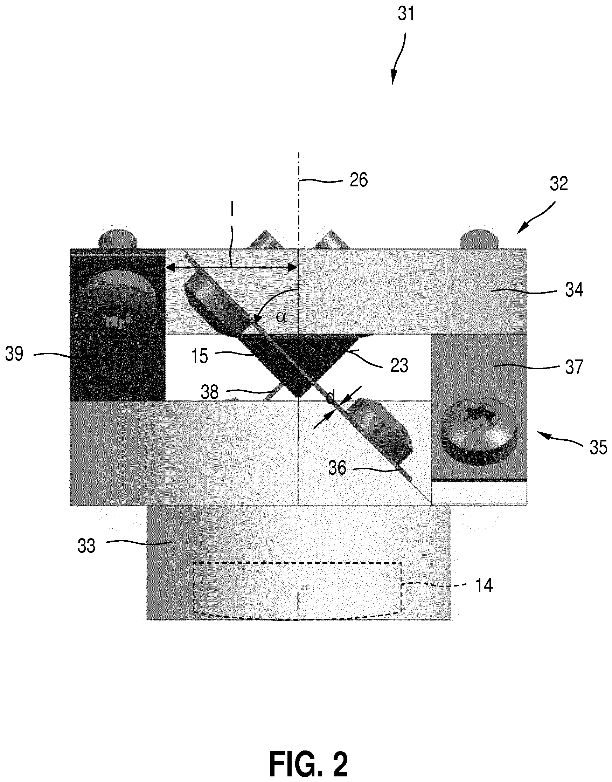

**FIG. 2** zeigt eine erste Ausführungsform einer erfindungsgemäßen optischen Baugruppe **31** bestehend aus der Kollimationslinse 14, dem Kegelspiegel 15, einem mehrteiligen Optikträger **32** mit einem ersten Trägerelement **33,** an dem die Kollimationslinse 14 befestigt ist, und einem zweiten Trägerelement **34,** an dem der Kegelspiegel 15 befestigt ist, und einer Verbindungseinrichtung **35,** die das erste und zweite Trägerelement 33, 34 miteinander verbindet.

Die Verbindungseinrichtung 35 umfasst vier ebene Verbindungselemente **36, 37, 38, 39,** die als dünnwandige Blechteile ausgebildet sind. Die Verbindungselemente 36, 38 sind als erste Verbindungselemente und die Verbindungselemente 37, 39 als zweite Verbindungselemente ausgebildet. Die ersten Verbindungselemente 36, 38 und die zweiten Verbindungselemente 37, 39 sind in einer Umfangsrichtung des Kegelspiegels 15 abwechselnd hintereinander angeordnet und sind gegensinnig zueinander ausgebildet. Durch die gegensinnige Anordnung der ersten Verbindungselemente 36, 38 und der zweiten Verbindungselemente 37, 39 wird die Stabilität der Verbindung zwischen den Trägerelementen 33, 34 verbessert.

Die ersten und zweiten Verbindungselemente 36-39 sind jeweils unter einem Neigungswinkel α zur Kegelachse 26 des Kegelspiegels 15 geneigt und weisen einen Abstand I zur Kegelachse 26 auf. Der Neigungswinkel α beträgt im Ausführungsbeispiel der optischen Baugruppe 31 ca. 45° zur Kegelachse 26. Über den Neigungswinkel α der Verbindungselemente kann die Breite des Winkelbereiches, in dem die Helligkeit des Ringstrahls 24 reduziert ist, eingestellt werden; je schräger die ersten und zweiten Verbindungselemente 36-39 angeordnet sind, umso breiter ist der Winkelbereich mit reduzierter Helligkeit. Der Abstand I der ersten und zweiten Verbindungselemente 36-39 zur Kegelachse 26 liegt zwischen 5 mm und 20 mm und entspricht im Ausführungsbeispiel der optischen Baugruppe 31 ungefähr dem Durchmesser des Kegelspiegels 15. Ein Abstand zwischen 5 mm und 20 mm zur Kegelachse 26 erlaubt eine kompakte Ausbildung der optischen Baugruppe 31. Die ersten und zweiten Verbindungselemente 36-39 sind als dünnwandige Blechteile mit einer Wandstärke d ausgebildet; die Wandstärke d liegt zwischen 0,1 mm und 0,7 mm.

Eine Reduzierung bis zu 20 % ist für den Anwender akzeptabel und die Verbindungseinrichtung 35 wird so ausgelegt, dass 20 % nicht überschritten werden. Für typische Messaufgaben auf Baustellen eignen sich Ringstrahlen mit Strahlbreiten zwischen 2 mm und 6 mm. Die Reduzierung der Helligkeit ist abhängig vom Neigungswinkel α der ersten und zweiten Verbindungselemente 36-39 zur Kegelachse 26 und von der Wandstärke d der ersten und zweiten Verbindungselemente 36-39. Je geringer die Wandstärke d ist, umso kleiner kann der Neigungswinkel α zur Kegelachse 26 ausgebildet werden. Bei schmalen Strahlbreiten (2 mm) sind ein Neigungswinkel α von 20° bis 45° und eine Wandstärke d von maximal 0,3 mm geeignet, um die Reduzierung unter 20 % zu halten. Für mittlere Strahlbreiten (4 mm) eignen sich Neigungswinkel α zwischen 10° und 40° und Wandstärke d von maximal 0,5 mm, um die Reduzierung unter 20 % zu halten. Bei breiten Strahlbreiten (6 mm) sind Neigungswinkel α von 5° bis 45° und Wandstärke d zwischen 0,1 mmm und 0,7 mm geeignet, um die Reduzierung unter 20 % zu halten.

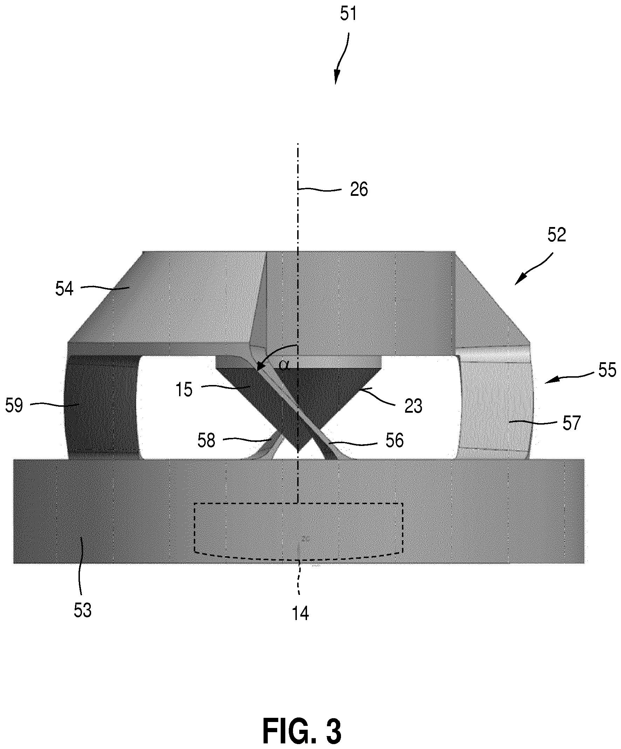

**FIG. 3** zeigt eine zweite Ausführungsform einer erfindungsgemäßen optischen Baugruppe **51** bestehend aus der Kollimationslinse 14, dem Kegelspiegel 15, einem einteiligen Optikträger **52** mit einem ersten Trägerelement **53,** an dem die Kollimationslinse 14 befestigt ist, und einem zweiten Trägerelement **54,** an dem der Kegelspiegel 15 befestigt ist, und einer Verbindungseinrichtung **55,** die das erste und zweite Trägerelement 53, 54 miteinander verbindet.

Die Verbindungseinrichtung 55 umfasst vier Verbindungselemente **56, 57, 58, 59,** die mit dem ersten und zweiten Trägerelement 53, 54 einen einteiligen Optikträger 52 bilden. Die Verbindungselemente 56, 58 sind als erste Verbindungselemente und die Verbindungselemente 57, 59 als zweite Verbindungselemente ausgebildet; die ersten Verbindungselemente 56, 58 und zweiten Verbindungselemente 57, 59 sind in Umfangsrichtung des Kegelspiegels 15 abwechselnd hintereinander angeordnet.

Die ersten und zweiten Verbindungselemente 56, 57, 58, 59 der Verbindungseinrichtung 55 unterscheiden sich von den ersten und zweiten Verbindungselementen 36, 37, 38, 39 der Verbindungseinrichtung 35 dadurch, dass sie wendelförmig ausgebildet sind. Durch die wendelförmige Ausbildung der ersten und zweiten Verbindungselemente 56, 57, 58, 59 kann der Teil des Ringstrahls, der durch die ersten und zweiten Verbindungselemente 56, 57, 58, 59 ausgeblendet wird, gegenüber ebenen Verbindungselementen weiter reduziert werden. Bezüglich der Neigungswinkel α zur Kegelachse 26, der Abstände I zur Kegelachse 26 und der Wandstärken d gelten für die ersten und zweiten Verbindungselemente 56-59 die gleichen Einschränkungen wie für die ersten und zweiten Verbindungselemente 36-39 der FIG. 2.

Der kollimierte Laserstrahl 22 wird an der reflektierenden Mantelfläche 23 des Kegelspiegels 15 umgelenkt und in den Ringstrahl 24 umgeformt. Durch die Schrägstellung der ersten und zweiten Verbindungselemente wird ein Verbindungselement von unterschiedlichen Teilen des Ringstrahls 24 getroffen. Die wendelförmige Ausbildung der ersten und zweiten Verbindungselemente 56, 57, 58, 59 führt dazu, dass jeder Teil des Ringstrahls, der sich ausgehend von der reflektierenden Mantelfläche 23 radial ausbreitet, senkrecht auf das Verbindungselement auftrifft und der ausgeblendete Teil des Ringstrahls 24 minimiert wird.

## Patentansprüche

1. Lasersystem (10) mit einer Laserstrahlquelle (11), die einen Laserstrahl (12) erzeugt, und mit einer optischen Baugruppe (31; 51), die im Strahlengang des Laserstrahls (12) hinter der Laserstrahlquelle (11) angeordnet ist, wobei die optische Baugruppe (31; 51) umfasst:
▪ eine Kollimationslinse (14), die den Laserstrahl (12) in einen kollimierten Laserstrahl (22) umformt,
▪ einen Kegelspiegel (15), der eine reflektierende Mantelfläche (23) aufweist und den kollimierten Laserstrahl (22), der sich in Richtung der Kegelachse (26) des Kegelspiegels (15) ausbreitet, in einer Ausbreitungsebene (25) senkrecht zur Kegelachse (26) in einen Ringstrahl (24) umformt,
▪ einen Optikträger (32; 52) mit einem ersten Trägerelement (33; 53), an dem die Kollimationslinse (14) befestigt ist, und einem zweiten Trägerelement (34; 54), an dem der Kegelspiegel (15) befestigt ist, und
▪ eine Verbindungseinrichtung (35; 55) mit mindestens einem Verbindungselement (36, 37, 38, 39; 56, 57, 58, 59), das das erste Trägerelement (33; 53) und das zweite Trägerelement (34; 54) miteinander verbindet, wobei das mindestens eine Verbindungselement (36-39; 56-59) windschief zur Kegelachse (26) des Kegelspiegels (15) angeordnet ist,
**dadurch gekennzeichnet, dass** die Verbindungseinrichtung (35; 55) eine Anzahl von 2n, n ≥ 1 Verbindungselementen (36-39; 56-59) aufweist, wobei n Verbindungselemente als erste Verbindungselemente (36, 38; 56, 58) und n Verbindungselemente als zweite Verbindungselemente (37, 39; 57, 59) ausgebildet sind, wobei die ersten Verbindungselemente (36, 38; 56, 58) und zweiten Verbindungselemente (37, 39; 57, 59) in einer Umfangsrichtung des Kegelspiegels (15) gegensinnig geneigt angeordnet sind und in dieser Umfangsrichtung des Kegelspiegels (15) abwechselnd hintereinander angeordnet sind.

2. Lasersystem nach Anspruch 1, **dadurch gekennzeichnet, dass** das erste Trägerelement (53), das zweite Trägerelement (54) und die Verbindungseinrichtung (55) einteilig ausgebildet sind.

3. Lasersystem nach Anspruch 2, **dadurch gekennzeichnet, dass** das erste Trägerelement (53), das zweite Trägerelement (54) und die Verbindungseinrichtung (55) als einteiliges Druckgussteil ausgebildet sind.

4. Lasersystem nach einem der Ansprüche 1 bis 3, **dadurch gekennzeichnet, dass** die n ersten und zweiten Verbindungselemente (56-59) wendelförmig ausgebildet sind.

5. Lasersystem nach einem der Ansprüche 1 bis 4, **dadurch gekennzeichnet, dass** die n ersten und zweiten Verbindungselemente (36-39; 56-59) um einen Neigungswinkel (α) zwischen 5° und 45° zur Kegelachse (26) geneigt sind.

6. Lasersystem nach einem der Ansprüche 1 bis 5, **dadurch gekennzeichnet, dass** die n ersten und zweiten Verbindungselemente (36-39; 56-59) in der Ausbreitungsebene (25) einen Abstand (I) zur Kegelachse (26) zwischen 5 mm und 20 mm aufweisen.

7. Lasersystem nach einem der Ansprüche 1 bis 6, **dadurch gekennzeichnet, dass** die Verbindungseinrichtung (35; 55) eine Anzahl von mindestens 3 Verbindungselementen (36-39; 56-59) aufweist, wobei die Wandstärke (d) der Verbindungselemente (36-39; 56-59) zwischen 0,1 mm und 0,7 mm beträgt.

## Claims

1. Laser system (10) comprising a laser beam source (11) that produces a laser beam (12) and comprising an optical assembly (31; 51) arranged in the beam path of the laser beam (12) behind the laser beam source (11), the optical assembly (31; 51) including:
▪ a collimating lens (14) that reshapes the laser beam (12) into a collimated laser beam (22),
▪ a conical mirror (15) that has a reflecting lateral surface (23) and reshapes the collimated laser beam (22) propagating in the direction of the cone axis (26) of the conical mirror (15) into an annular beam (24) in a propagation plane (25) perpendicular to the cone axis (26),
▪ a lens system carrier (32; 52) with a first carrier element (33; 53) on which the collimating lens (14) is mounted and a second carrier element (34; 54) on which the conical mirror (15) is mounted and
▪ a connecting device (35; 55) with at least one connecting element (36, 37, 38, 39; 56, 57, 58, 59) connecting the first carrier element (33; 53) and the second carrier element (34; 54) together, the at least one connecting element (36-39; 56-59) being arranged askew relative to the cone axis (26) of the conical mirror (15),
**characterised in that** the connecting device (35; 55) has a number of 2n, n ≥ 1 connecting elements (36-39; 56-59), wherein n connecting elements are designed as first connecting elements (36, 38; 56, 58) and n connecting elements are designed as second connecting elements (37, 39; 57, 59) and wherein the first connecting elements (36, 38; 56, 58) and second connecting elements (37, 39; 57, 59) are arranged in such a manner that they are inclined in opposite directions in a circumferential direction of the conical mirror and are arranged alternately one behind the other in this circumferential direction of the conical mirror (15).

2. Laser system according to claim 1, **characterised in that** the first carrier element (53), the second carrier element (54) and the connecting device (55) are formed in one piece.

3. Laser system according to claim 2, **characterised in that** the first carrier element (53), the second carrier element (54) and the connecting device (55) are formed as a one-piece pressure die-cast part.

4. Laser system according to one of claims 1 to 3, **characterised in that** the n first and second connecting elements (56-59) are helical.

5. Laser system according to one of claims 1 to 4, **characterised in that** the n first and second connecting elements (36-39; 56-59) are inclined by an angle of inclination (α) of between 5° and 45° relative to the cone axis (26).

6. Laser system according to one of claims 1 to 5, **characterised in that** the n first and second connecting elements (36-39; 56-59) are disposed at a distance (1) from the cone axis (26) of between 5 mm and 20 mm in the propagation plane (25).

7. Laser system according to one of claims 1 to 6, **characterised in that** the connecting device (35; 55) has a number of at least 3 connecting elements (36-39; 56-59), the wall thickness (d) of the connecting elements (36-39; 56-59) being between 0.1 mm and 0.7 mm.

## Revendications

1. Système laser (10) comportant une source de faisceau laser (11) générant un faisceau laser (12), et un ensemble optique (31 ; 51) agencé derrière la source de faisceau laser (11) dans le trajet de faisceau du faisceau laser (12), l'ensemble optique (31 ; 51) comprenant :
▪ une lentille de collimation (14) conformant le faisceau laser (12) pour obtenir un faisceau laser collimaté (22),
▪ un miroir conique (15) comportant une surface extérieure réfléchissante (23) et conformant le faisceau laser collimaté (22) qui se propage en direction de l'axe de cône (26) du miroir conique (15) pour obtenir un faisceau annulaire (24) dans un plan de propagation (25) perpendiculaire à l'axe de cône (26),
▪ un support optique (32 ; 52) ayant un premier élément de support (33 ; 53) sur lequel est fixée la lentille de collimation (14), et un second élément de support (34 ; 54) sur lequel est fixé le miroir conique (15), et
▪ un dispositif de liaison (35 ; 55) ayant au moins un élément de liaison (36, 37, 38, 39 ; 56, 57, 58, 59) qui relie mutuellement le premier élément de support (33 ; 53) et le second élément de support (34 ; 54), dans lequel ledit au moins élément de liaison (36 à 39 ; 56 à 59) est agencé en biais par rapport à l'axe de cône (26) du miroir conique (15),
**caractérisé en ce que** le dispositif de liaison (35 ; 55) comporte un nombre de 2n, n ≥ 1, éléments de liaison (36 à 39 ; 56 à 59), dans lequel n éléments de liaison sont formés comme des premiers éléments de liaison (36, 38 ; 56, 58) et n éléments de liaison sont formés comme des seconds éléments de liaison (37, 39 ; 57, 59), dans lequel les premiers éléments de liaison (36, 38 ; 56, 58) et les seconds éléments de liaison (37, 39 ; 57, 59) sont agencés de manière inclinée en sens contraire dans une direction circonférentielle du miroir conique et sont agencés les uns derrière les autres de manière alternée dans cette direction circonférentielle du miroir conique (15) .

2. Système laser selon la revendication 1, **caractérisé en ce que** le premier élément de support (53), le second élément de support (54) et le dispositif de liaison (55) sont formés d'un seul tenant.

3. Système laser selon la revendication 2, **caractérisé en ce que** le premier élément de support (53), le second élément de support (54) et le dispositif de liaison (55) sont formés comme une pièce moulée sous pression d'un seul tenant.

4. Système laser selon l'une des revendications 1 à 3, **caractérisé en ce que** les n premiers et seconds éléments de liaison (56 à 59) sont formés de manière hélicoïdale.

5. Système laser selon l'une des revendications 1 à 4, **caractérisé en ce que** les n premiers et seconds éléments de liaison (36 à 39 ; 56 à 59) sont inclinés par rapport à l'axe de cône (26) d'un angle d'inclinaison (α) compris entre 5° et 45°.

6. Système laser selon l'une des revendications 1 à 5, **caractérisé en ce que** les n premiers et seconds éléments de liaison (36 à 39 ; 56 à 59) ont, dans le plan de propagation (25), une distance (I) par rapport à l'axe de cône (26) comprise entre 5 mm et 20 mm.

7. Système laser selon l'une des revendications 1 à 6, **caractérisé en ce que** le dispositif de liaison (35 ; 55) comporte un nombre d'au moins 3 éléments de liaison (36 à 39 ; 56 à 59), l'épaisseur de paroi (d) des éléments de liaison (36 à 39 ; 56 à 59) étant comprise entre 0,1 mm et 0,7 mm.
